# EUROPEAN PATENT APPLICATION

(11) **EP 2 955 683 A1**
(43) Date of publication of application: **16.12.2015**
(21) Application number: 15171228.8
(22) Date of filing: 09.06.2015
(51) Int. Cl.: G06Q 30/06

(54) **SALES SYSTEM AND A CLOUD SERVER**

(30) Priority: 11.06.2014 TW 103120206
(71) Applicant: Wang, Hsin-Han, New Taipai City 23847 (TW)
(72) Inventor: WANG, Hsin-Han, 23847 New Taipai City (TW)
(74) Representative: Zimmermann, Tankred Klaus

(57) **Abstract**

A sales system (100) includes a terminal device (1) and a cloud server (2). The cloud server (2) transmits a plurality of patterns and plural representations of food materials to the terminal device (1). The terminal device (1) generates, according to user operation of an input unit (11) thereof, a pattern selection associated with a selected one of the patterns. The terminal device (1) generates, according to user operation of the input unit (11), a material selection associated with a selected one of the food materials and associated with an arrangement of the selected food material for constituting the selected pattern, and transmits the material selection to the cloud server (2), so as to generate an order of food product related to the material selection.

## Description

The disclosure relates to a sales system and a cloud server, more particularly to a sales system and a cloud server which allow a customer to customize an appearance of a food product.

An appearance of a food product is usually a crucial factor that affects consumer's purchase intention. Generally, a food product sold in large quantities in a warehouse store usually has its package and appearance designed and made during mass production of the food product by a food manufacturer. However, the appearance of the food product is usually fixed and cannot be designed based on different needs of the consumers. Therefore, a sales system is desired to be developed which allows a consumer to customize the appearance of the food product, so as to provide customization services and to boost consumer's purchase intention.

Therefore, an object of the disclosure is to provide a sales system and a cloud server which allow a consumer to customize an appearance of a food product.

In a first aspect of the disclosure, the sales system includes a terminal device which includes an input unit, and a cloud server which is connected to a communication network and which includes a database and a processor coupled to the database. The database stores a plurality of patterns and plural representations of food materials, which correspond respectively to a variety of food materials.

When the terminal device establishes a communication link with the cloud server through the communication network, the terminal device is programmed to transmit a request for customization of food product to the cloud server via the communication link. After receiving the request transmitted by the terminal device, the processor of the cloud server is programmed to transmit the plurality of patterns and the plural representations of food materials to the terminal device via the communication link. After receiving the plurality of patterns transmitted by the cloud server, the terminal device is programmed to generate, according to user operation of the input unit, a pattern selection that is associated with a selected one of the plurality of patterns, and to transmit the pattern selection to the cloud server via the communication link. After receiving the plural representations of food materials transmitted by the cloud server, the terminal device is programmed to generate, according to user operation of the input unit, a material selection that is associated with a selected one of the variety of food materials and that is associated with an arrangement of the selected one of the variety of food materials for constituting the selected one of the plurality of patterns, and to transmit the material selection to the cloud server via the communication link. After receiving the pattern selection and the material selection transmitted by the terminal device, the processor of the cloud server is programmed to generate an order of food product related to the material selection.

In a second aspect of the disclosure, the cloud server is connected to a communication network, and is configured to establish a communication link with a terminal device through the communication network. The cloud server includes a database storing a plurality of patterns and plural representations of food materials, which correspond respectively to a variety of food materials, and a processor coupled to the database.

When receiving a request for customization of food product transmitted by the terminal device, the processor of the cloud server is programmed to transmit the plurality of patterns and the plural representations of food materials to the terminal device via the communication link. The plurality of patterns transmitted by the cloud server enable the terminal device to generate, according to user operation of an input unit of the terminal device, a pattern selection that is associated with a selected one of the plurality of patterns, and to transmit the pattern selection to the cloud server via the communication link. The plural representations of food materials transmitted by the cloud server enable the terminal device to generate, according to user operation of the input unit, a material selection that is associated with a selected one of the variety of food materials and that is associated with an arrangement of the selected one of the variety of food materials for constituting the selected one of the plurality of patterns, and to transmit the material selection to the cloud server via the communication link. After receiving the pattern selection and the material selection transmitted by the terminal device, the processor of the cloud server is programmed to generate an order of food product related to the material selection.

An effect of the disclosure resides in that, by virtue of the cloud server which transmits the plurality of patterns and the plural representations of food materials to the terminal for selection by the user and which generate the order of food product related to the material selection, the user is allowed to customize an appearance of the food product.

Other features and advantages of the disclosure will become apparent in the following detailed description of the embodiments with reference to the accompanying drawings, of which:
Figure 1 is a block diagram illustrating a first embodiment of a sales system according to the disclosure;
Figure 2 is a flow chart of a procedure performed by the first embodiment;
Figure 3 is a flow chart of a procedure performed by a second embodiment of the sales system according to the disclosure;
Figure 4 is a flow chart of a procedure performed by a third embodiment of the sales system according to the disclosure; and
Figure 5 is a flow chart of a procedure performed by a fourth embodiment of the sales system according to the disclosure.

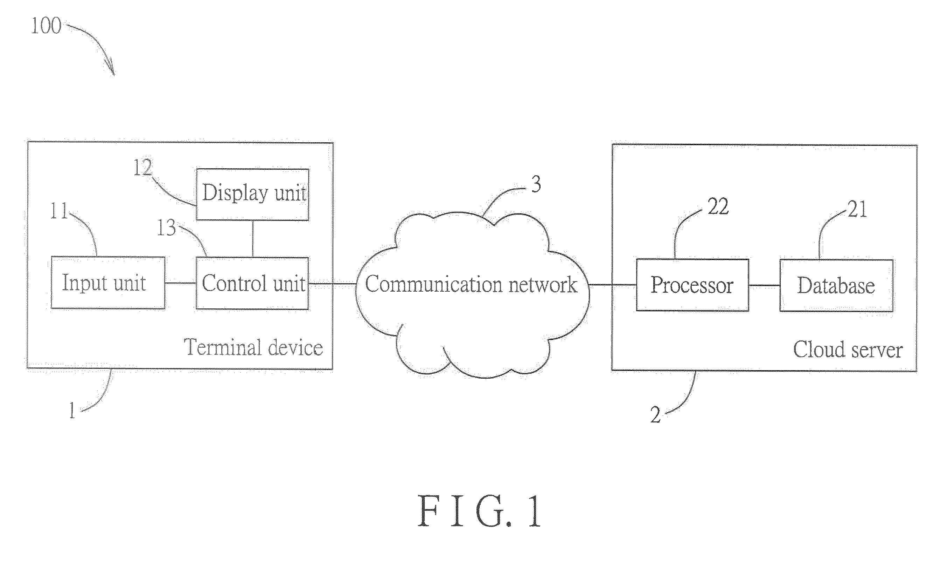

Referring to Figure 1, a first embodiment of a sales system 100 according to the disclosure includes a terminal device 1 and a cloud server 2. The terminal device 1 includes an input unit 11, a display unit 12, and a control unit 13 coupled to the input unit 11 and the display unit 12. The cloud server 2 is connected to a communication network 3, and includes a database 21 and a processor 22 which is coupled to the database 21. The database 21 is configured to store a plurality of patterns, plural representations of food materials, and a plurality of material suggestions which correspond respectively to the plurality of patterns. The plural representations of food materials correspond respectively to a variety of food materials. In this embodiment, the plurality of patterns are two-dimensional (2D) patterns, but are not limited to this format. The communication network 3 of this embodiment is the Internet, and the terminal device 1 is an electronic device, such as a smart phone or a personal computer, capable of connection to the communication network 3.

The plurality of f patterns, for instance, may be patterns of a car, a dog and a flower, respectively. The plural representations of food materials, for instance, may be images of chocolate, colored frosting and strawberries, respectively.

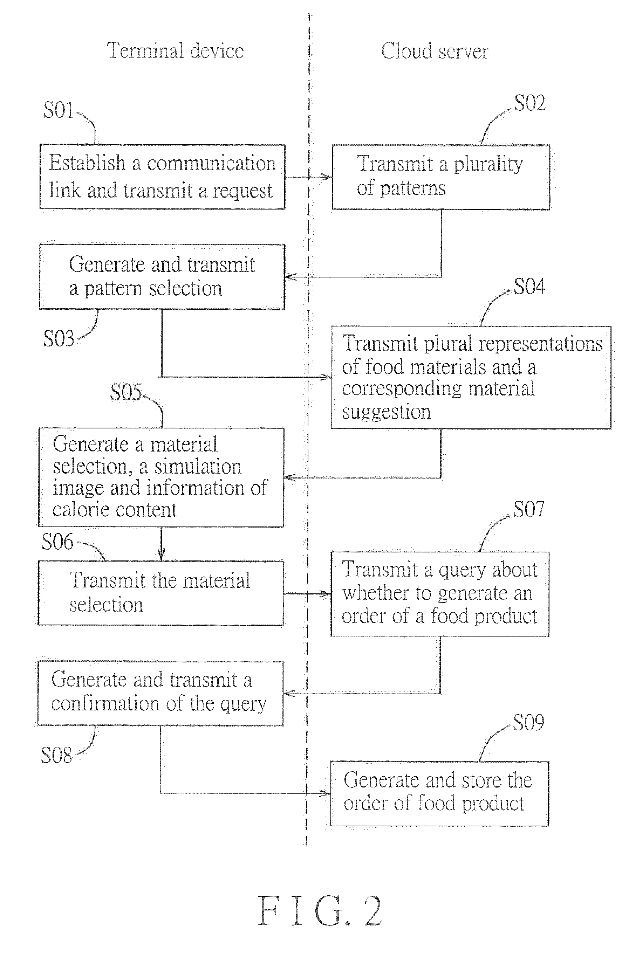

Referring to Figure 2 in combination with Figure 1, a flow chart of a procedure performed by the first embodiment of the sales system is illustrated. For example, a sales system for customization of a cake.

In step S01, when the terminal device 1 establishes a communication link with the cloud server 2 through the communication network 3, the terminal device 1 is operable to transmit a request for customization of food product, e.g., a cake, to the cloud server 2 via the communication link.

In step S02, after receiving the request transmitted by the terminal device 1, the processor 22 of the cloud server 2 is programmed to transmit the plurality of patterns to the terminal device 1 via the communication link.

After receiving the plurality of patterns transmitted by the cloud server 2, the control unit 13 of the terminal device 1 is programmed to control the display unit 12 to display the plurality of patterns for browse by a user of the terminal device 1, i.e., a consumer.

In step S03, the control unit 13 of the terminal device 1 is programmed to generate, according to user operation of the input unit 11, a pattern selection that is associated with a selected one of the plurality of patterns, and to transmit the pattern selection to the cloud server 2 via the communication link. For example, the user selects the pattern of a car to be represented on the cake.

In step S04, after receiving the pattern selection transmitted by the terminal device 1, the processor 22 of the cloud server 2 is programmed to transmit to the terminal device 1, via the communication link, the plural representations of food materials as well as a corresponding material suggestion which is one of the material suggestions corresponding to the selected one of the plurality of patterns. This material suggestion is associated with a suggested one of the variety of food materials and a suggested arrangement of the suggested one of the food materials to constitute the selected one of the plurality of patterns. For example, the material suggestion may include a tip of decorating a car body of the pattern of the car with the colored frosting.

After receiving the plural representations of food materials and the corresponding material suggestion transmitted by the cloud server 2, the control unit 13 of the terminal device 1 is programmed to control the display unit 12 to display the plural representations of food materials and the corresponding material suggestion for browse by the user. The user is able to operate the input unit 11 to select one of the variety of food materials, and to arrange the selected food material to constitute the selected one of the plurality of patterns.

Therefore, in step S05, the control unit 13 of the terminal device 1 is programmed to generate a material selection according to user operation of the input unit 11, as well as a simulation image of an appearance of the food product and information of calorie content of the food product which are to be displayed on the display unit 12 of the terminal device 1. The material selection is associated with a selected one of the variety of food materials and is associated with an arrangement of the selected one of the variety of food materials for constituting the selected one of the plurality of patterns. For example, the user selects strawberries to decorate a car body of the pattern of the car, and selects chocolate to decorate car wheels of the pattern of the car.

The simulation image is associated with the material selection, and is to be displayed for user's preview of the appearance of the food product that is rendered according to the material selection. The information of calorie content is associated with the material selection and is to be displayed for user's acknowledgment of the calorie content of the food product that is calculated according to the material selection.

Subsequently, in step S06, the control unit 13 of the terminal device 1 is programmed to transmit the material selection to the cloud server 2 via the communication link.

In step S07, after receiving the material selection transmitted by the terminal device 1, the processor 22 of the cloud server 2 is further programmed to transmit a query about whether to generate an order of the food product based on the pattern selection and the material selection to the terminal device 1 via the communication link.

After receiving the query transmitted by the cloud server 2, the user is prompted to operate the input unit 11 of the terminal device 1 for confirmation of the query.

Therefore, in step S08, the control unit 13 of the terminal device 1 is programmed to generate, according to user operation of the input unit 11, a confirmation of the query, and to transmit the confirmation to the cloud server 2 via the communication link.

In step S09, after receiving the confirmation transmitted by the terminal device 1, the processor 22 of the cloud server 2 is programmed to generate the order of food product related to the pattern selection and the material selection, and to store the order of food product thus generated into the database 31. A vendor in charge of the cloud server 2 is thus able to produce the food product based on the order stored in the database 21, and optionally, to ship the food product to the user, for instance.

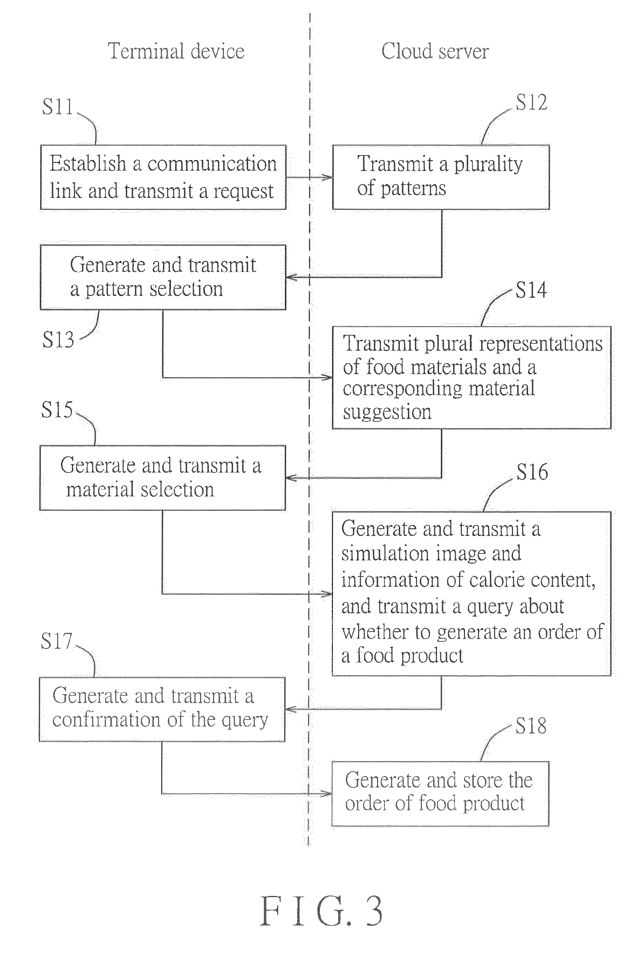

Referring to Figure 3, a flow chart of a procedure performed by a second embodiment of the sales system 100 according to the disclosure is illustrated. Since steps S11 to S14 of the second embodiment are identical to steps S01 to S04 of the first embodiment, details of the same are not reiterated herein for the sake of brevity.

In this embodiment, after receiving the plural representations of food materials and the corresponding material suggestion transmitted by the cloud server 2, the control unit 13 of the terminal device 1 controls the display unit 12 to display the same for browse by the user. The user is able to select one of the food materials and an arrangement of said one of the food materials thus selected to constitute the pattern selected in step S13 by operating the input unit 11 of the terminal device 1.

In this way, in step S15, the control unit 13 of the terminal device 1 is programmed to generates a material selection according to user's operation of the input unit 11, and to transmit the material selection to the cloud server 2 via the communication link.

In step S16, after receiving the material selection transmitted by the terminal device 1, the processor 22 of the cloud server 2 is programmed to generate a simulation image of an appearance of the food product, and information of calorie content of the food product according to the material selection. The processor 22 is further programmed to transmit the simulation image, the information of calorie content, and a query about whether to generate an order of the food product based on the pattern selection and the material selection to the terminal device 1 via the communication link.

After receiving the simulation image, the information of calorie content and the query transmitted by the cloud server 2, the control unit 13 of the terminal device 1 is programmed to control the display unit 12 to display the simulation image for user's preview of the appearance of the food product that is rendered according to the material selection. The display unit 12 is further controlled to display the information of calorie content for user's acknowledgment of the calorie content of the food product that is calculated according to the material selection. The user is then prompted to operate the input unit 11 of the terminal device 1 for confirmation of the query.

Since the remaining steps S17 and S18 of this embodiment are identical to steps S08 and S09 of the first embodiment, detailed descriptions of the same are omitted herein for the sake of brevity.

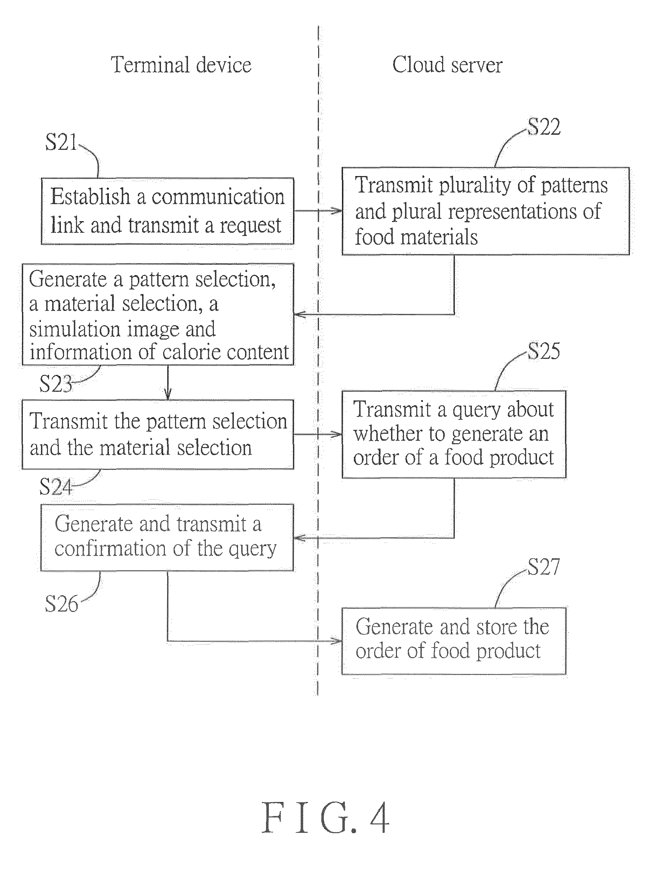

Referring to Figure 4, a flow chart of a procedure performed by a third embodiment of the sales system 100 according to the disclosure is illustrated. Step S21 of this embodiment is identical to step S01 of the first embodiment.

Subsequently, in step S22, after receiving the request transmitted by the terminal device 1, the processor 22 of the cloud server 2 is programmed to transmit the plurality of patterns and the plural representations of food materials to the terminal device 1 via the communication link.

After receiving the plurality of patterns and the plural representations of food materials transmitted by the cloud server 2, the control unit 13 of the terminal device 1 is programmed to control the display unit 12 to display the plurality of patterns and the plural representations of food materials for browse by the user of the terminal device 1. The user is able to select one of the plurality of patterns by operating the input unit 11, such that, in step S23, the control unit 13 is programmed to generate, according to user operation of the input unit 11, a pattern selection that is associated with a selected one of the plurality of patterns. The user is further able to select one of the food materials and to arrange said one of the food materials thus selected to constitute the pattern thus selected by operating the input unit 11 of the terminal device 1.

In this way, in step S23, the control unit 13 of the terminal device 1 is further programmed to generate a material selection according to user operation of the input unit 11, as well as a simulation image of an appearance of the food product and information of calorie content of the food product. The control unit 13 is further programmed to control the display unit 12 to display the simulation image and the information of calorie content for browse by the user.

In step S24, the control unit 13 of the terminal device 1 is programmed to transmit the pattern selection and the material selection to the cloud server 2 via the communication link.

Since the remaining steps S25 to S27 of this embodiment are identical to steps S07 to S09 of the first embodiment, details of the same are not reiterated herein.

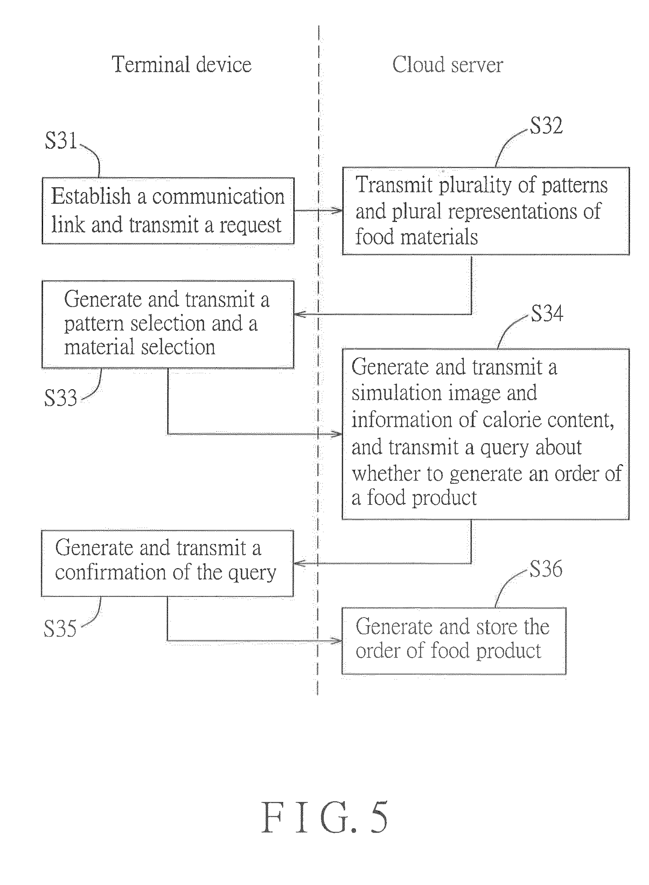

Referring to Figure 5, a flow chart of a procedure performed by a fourth embodiment of the sales system 100 according to the disclosure is illustrated. Steps S31 and S32 of this embodiment are identical to steps S21 and S22 of the third embodiment.

Subsequently, after receiving the plurality of patterns and the plural representations of food materials transmitted by the cloud server 2, the control unit 13 of the terminal device 1 is programmed to control the display unit 12 to display the plurality of patterns and the plural representations of food materials for browse by the user of the terminal device 1. The user is able to select one of the plurality of patterns by operating the input unit 11, such that in step S33, the control unit 13 is programmed to generate, according to user operation of the input unit 11, a pattern selection that is associated with a selected one of the plurality of patterns. The user is further able to select one of the food materials and to arrange said one of the food materials thus selected to constitute the pattern thus selected by operating the input unit 11 of the terminal device 1.

In this way, in step S33, the control unit 13 of the terminal device 1 is further programmed to generate a material selection according to user operation of the input unit 11, and to transmit the pattern selection and the material selection to the cloud server 2 via the communication link.

In step S34, after receiving the pattern selection and the material selection transmitted by the terminal device 1, the processor 22 of the cloud server 2 is programmed to generate a simulation image of an appearance of the food product, and information of calorie content of the food product according to the material selection. The processor 22 is further programmed to transmit the simulation image, the information of calorie conten t, and a query about whether to generate an order of the food product based on the pattern selection and the material selection to the terminal device 1 via the communication link.

After receiving the simulation image, the information of calorie content and the query transmitted by the cloud server 2, the control unit 13 of the terminal device 1 is programmed to control the display unit 12 to display the simulation image for user's preview of the appearance of the food product that is rendered according to the material selection. The display unit 12 is further controlled to display the information of calorie content for user's acknowledgment of the calorie content of the food product that is calculated according to the material selection. The user is then prompted to operate the input unit 11 of the terminal device 1 for confirmation of the query.

Since the remaining steps S35 and S36 of this embodiment are identical to steps S26 and S27 of the of the third embodiment, detailed descriptions of the same are omitted herein for the sake of brevity.

To sum up, the sales system 100 of this disclosure utilizes the cloud server 2 to transmit the plurality of patterns and the plural representations of food materials to the terminal device 1, and to generate an order of food product related to the material selection, such that the consumer is allowed to customize the appearance of the food product so as to promote purchase intention of the consumer. Moreover, the sales system 100 further provides the simulation image of the appearance of the food product which is to be displayed for user's preview of the appearance of the food product customized by the consumer.

While the disclosure has been described in connection with what is(are) considered the exemplary embodiment(s), it is understood that this disclosure is not limited to the disclosed embodiment(s) but is intended to cover various arrangements included within the spirit and scope of the broadest interpretation so as to encompass all such modifications and equivalent arrangements.

## Claims

1. A sales system (100) **characterized by**:
a terminal device (1) which includes an input unit (11); and
a cloud server (2) which is connected to a communication network (3) and which includes a database (21) and a processor (22) coupled to said database (21), said database (21) storing a plurality of patterns and plural representations of food materials, which correspond respectively to a variety of food materials, wherein:
when said terminal device (1) establishes a communication link with said cloud server (2) through the communication network (3), said terminal device (1) is operable to transmit a request for customization of food product to said cloud server (2) via the communication link;
after receiving the request transmitted by said terminal device (1), said processor (22) of said cloud server (2) is programmed to transmit the plurality of patterns and the plural representations of food materials to said terminal device (1) via the communication link;
after receiving the plurality of patterns transmitted by said cloud server (2), said terminal device (1) is programmed to generate, according to user operation of said input unit (11), a pattern selection that is associated with a selected one of the plurality of patterns, and to transmit the pattern selection to said cloud server (2) via the communication link;
after receiving the plural representations of food materials transmitted by said cloud server (2), said terminal device (1) is programmed to generate, according to user operation of said input unit (11), a material selection that is associated with a selected one of the variety of food materials and that is associated with an arrangement of the selected one of the variety of food materials for constituting the selected one of the plurality of patterns, and to transmit the material selection to said cloud server (2) via the communication link; and
after receiving the pattern selection and the material selection transmitted by said terminal device (1), said processor (22) of said cloud server (2) is programmed to generate an order of food product related to the material selection.

2. The sales system (100) of Claim 1, **characterized in that**:
after receiving the material selection transmitted by said terminal device (1), said processor (22) of said cloud server (2) is further programmed to transmit a query about whether to generate the order of food product based on the pattern selection and the material selection to said terminal device (1) via the communication link; and
after receiving the query transmitted by said cloud server (2), said terminal device (1) is programmed to generate, according to user operation of said input unit (11), a confirmation of the query, and to transmit the confirmation to the said cloud server (2) via the communication link to enable said processor (22) of said cloud server (2) to generate the order of food product related to the pattern selection and the material selection.

3. The sales system (100) of Claims 1 or 2, **characterized in that** said processor (22) of said cloud server (2) is further programmed to store the order of food product thus generated into said database (21).

4. The sales system (100) of any one of Claims 1 to 3, **characterized in that**:
said processor (22) of said cloud server (2) is programmed to transmit the plural representations of food materials to said terminal device (1) via the communication link further after receiving the pattern selection transmitted by said terminal device (1).

5. The sales system (100) of any one of Claims 1 to 4, **characterized in that** said terminal device (1) further includes a display unit (12), and wherein after generating the material selection, said terminal device (1) is further programmed to generate a simulation image of an appearance of the food product associated with the material selection which is to be displayed on said display unit (12) of said terminal device (1) for user's preview of the appearance of the food product.

6. The sales system (100) of any one of Claims 1 to 4, **characterized in that** said terminal device (1) further includes a display unit (12), and wherein after generating the material selection, said terminal device (1) is further programmed to generate information of calorie content of the food product associated with the material selection which is to be displayed on said display unit (12) of said terminal device (1) for user's acknowledgment of the calorie content of the food product.

7. The sales system (100) of any one of Claims 1 to 4, **characterized in that** said terminal device (1) further includes a display unit (12), and wherein after receiving the material selection transmitted by said terminal device (1), said processor (22) of said cloud server (2) is further programmed to generate a simulation image of an appearance of the food product associated with the material selection which is to be displayed on said display unit (12) of said terminal device (1) for user's preview of the appearance of the food product.

8. The sales system (100) of any one of Claims 1 to 4, **characterized in that** said terminal device (1) further includes a display unit (12), and wherein after receiving the material selection transmitted by said terminal device (1), said processor (22) of said cloud server (2) is further programmed to generate information of calorie content of the food product associated with the material selection which is to be displayed on said display unit (12) of said terminal device (1) for user's acknowledgment of the calorie content of the food product.

9. The sales system (100) of Claim 4, **characterized in that**, after receiving the pattern selection transmitted by said terminal device (1), said processor (22) of said cloud server (2) is further programmed to provide to said terminal deice via the communication link a material suggestion that is associated with a suggested one of the variety of food materials and a suggested arrangement of the suggested one of the food materials to constitute the selected one of the plurality of patterns.

10. A cloud server (2) which is connected to a communication network (3) and which is configured to establish a communication link with a terminal device (1) through the communication network (3), said cloud server (2) **characterized by**:
a database (21) storing a plurality of patterns and plural representations of food materials, which correspond respectively to a variety of food materials; and
a processor (22) coupled to said database (21), wherein:
when receiving a request for customization of food product transmitted by the terminal device (1), said processor (22) of said cloud server (2) is programmed to transmit the plurality of patterns and the plural representations of food materials to the terminal device (1) via the communication link;
the plurality of patterns transmitted by said cloud server (2) enable the terminal device (1) to generate, according to user operation of an input unit (11) of the terminal device (1), a pattern selection that is associated with a selected one of the plurality of patterns, and to transmit the pattern selection to said cloud server (2) via the communication link;
the plural representations of food materials transmitted by said cloud server (2) enable the terminal device (1) to generate, according to user operation of the input unit (11), a material selection that is associated with a selected one of the variety of food materials and that is associated with an arrangement of the selected one of the variety of food materials for constituting the selected one of the plurality of patterns, and to transmit the material selection to said cloud server (2) via the communication link; and
after receiving the pattern selection and the material selection transmitted by the terminal device (1), said processor (22) of said cloud server (2) is programmed to generate an order of food product related to the material selection.

11. The cloud server (2) of Claim 10, **characterized in that**:
after receiving the material selection transmitted by the terminal device (1), said processor (22) of said cloud server (2) is further programmed to transmit a query about whether to generate the order of food product based on the pattern selection and the material selection to the terminal device (1) via the communication link;
the query transmitted by said cloud server (2) enables the terminal device (1) to generate, according to user operation of the input unit (11) thereof, a confirmation of the query, and to transmit the confirmation to the said cloud server (2) via the communication link for enabling said processor (22) of said cloud server (2) to generate the order of food product related to the material selection; and
said processor (22) of said cloud server (2) is further programmed to store the order of food product thus generated into said database (21).

12. The cloud server (2) of Claims 10 or 11, **characterized in that** said processor (22) of said cloud server (2) is programmed to transmit the plural representations of food materials to the terminal device (1) via the communication link further after receiving the pattern selection transmitted by the terminal device (1).

13. The cloud server (2) of any one of Claims 10 to 12, **characterized in that**, after receiving the material selection transmitted by the terminal device (1), said processor (22) of said cloud server (2) is further programmed to generate a simulation image of an appearance of the food product associated with the material selection which is to be displayed on a display unit (12) of the terminal device (1) for user's preview of the appearance of the food product.

14. The cloud server (2) of any one of Claims 10 to 12, **characterized in that**, after receiving the material selection transmitted by the terminal device (1), said processor (22) of said cloud server (2) is further programmed to generate information of calorie content of the food product associated with the material selection which is to be displayed on a display unit (12) of the terminal device (1) for user's acknowledgment to of the calorie content of the food product.

15. The cloud server (2) of Claim 10, **characterized in that**, after receiving the pattern selection transmitted by the terminal device (1), said processor (22) of said cloud server (2) is further programmed to provide to the terminal deice via the communication link a material suggestion that is associated with a suggested one of the variety of food materials and a suggested arrangement of the suggested one of the food materials to constitute the selected one of the plurality of patterns.
